# EUROPEAN PATENT APPLICATION

(11) **EP 2 988 513 A1**
(43) Date of publication of application: **24.02.2016**
(21) Application number: 15181477.9
(22) Date of filing: 18.08.2015
(51) Int. Cl.: H04N 21/234, H04N 21/258, H04N 21/2743, H04N 21/84, G06K 9/00, G11B 27/10, H04N 21/2187, H04N 21/4788, G06Q 50/00, H04N 21/8352

(54) **METHOD FOR PROVIDING REAL-TIME VIDEO AND DEVICE THEREOF AS WELL AS SERVER AND TERMINAL DEVICE**

(30) Priority: 20.08.2014 CN 201410412559
(71) Applicant: Xiaomi Inc., Beijing 100085 (CN)
(72) Inventor: LIU, Jie, 100085 BEIJING (CN)
(74) Representative: Delumeau, François Guy

(57) **Abstract**

The invention relates to a method for providing a real-time video. The method comprises: receiving (S11) in real time a video frame sent from a first terminal device and carried with a first user account and a frame identifier; storing (S12) the video frame in a video file corresponding to the first user account according to the frame identifier; determining (S13) content summary information of the video file; pushing (S14) the content summary information to a second terminal device logged in with a second user account associated with the first user account so that the second terminal device displays the content summary information and sends a video acquisition request for acquiring the video file after a selection of the content summary information is detected; and sending (S15) the video file to the second terminal device after the video acquisition request is received.

## Description

### TECHNICAL FIELD

The invention generally relates to the field of network technology, and more particularly, to a method for providing a real-time video and a device thereof as well as a server and a terminal device.

### BACKGROUND

With the rapid development of communication technology, a terminal device is becoming smarter and smarter and more and more popular. Users expect to use a terminal device to share and watch a real-time video with their friends in the first time so as to participate in splendid events. Current network bandwidth and servers are available for providing powerful technical support for real-time transport of a video.

In related technologies, a method for providing a real-time video is as below: a communication connection is established between a first terminal device and a second terminal device through a server, and then a video taken is transmitted in real time by the first terminal device to the second terminal device through the server, thus achieving sharing the real-time video between a first user using the first terminal device and a second user using the second terminal device.

However, in the foregoing method, a communication connection needs to be established between the first terminal device and the second terminal device for transmitting the real-time video. It is necessary for the second user to end the communication connection if the real-time video is undesirable, which not only wastes network resources but also affects user experience. Moreover, a real-time video may only be received by a user of the second terminal device that is chosen by the first terminal device, while other users who really want to watch the real-time video may even not know its existence, which also affects user experience.

### SUMMARY

In order to overcome problems in related technologies, the invention provides a method for providing a real-time video and a device thereof as well as a server and a terminal device.

According to a first aspect of the invention, a method for providing a real-time video is provided, comprising steps of:
receiving in real time a video frame sent from a first terminal device and carried with a first user account and a frame identifier;
storing the video frame in a video file corresponding to the first user account according to the frame identifier;
determining content summary information of the video file;
pushing the content summary information to a second terminal device logged in with a second user account associated with the first user account, so that the second terminal device displays the content summary information and sends a video acquisition request for acquiring the video file after a selection of the content summary information is detected; and
sending the video file to the second terminal device after the video acquisition request is received.

In an embodiment, the step of storing the video frame in a video file corresponding to the first user account according to the frame identifier comprises steps of:
searching for a video file corresponding to the first user account;
storing the video frame, if a video file corresponding to the first user account is searched out, in the video file according to the frame identifier; or
creating a video file corresponding to the first user account and saving the video frame in the created video file if no video file corresponding to the first user account is searched out.

In an embodiment, the step of determining content summary information of the video file comprises steps of:
extracting a first selected feature from each video frame of the video file;
identifying the extracted first selected feature by using at least one classifier created in advance, thus acquiring an identification result corresponding to the at least one classifier and a credibility of the identification result; and
combining the first user account with the identification result of a highest credibility, thus acquiring the content summary information of the video file.

Thus, this embodiment allows using at least one classifier to identify each first selected feature in order to make the identification of the content of the video file more simple and accurate and to facilitate the recommendation of content to users.

In an embodiment, the method further comprises steps of:
determining a first given number of scenes;
collecting at least a first given amount of pictures for each scene, the first given amount of pictures comprising interference pictures having at least a second given amount of pictures;
extracting a second selected feature from the first given amount of pictures; and
training and acquiring a scene classifier according to the second selected feature.

In an embodiment, the method further comprises steps of:
determining a second given number of events;
collecting at least a third given number of pictures for each event, the third given number of pictures comprising at least a fourth given number of interference pictures;
extracting a third selected feature from the third given number of pictures; and
training and acquiring an event classifier according to the third selected feature.

In an embodiment, the method further comprises steps of:
determining a fourth given number of persons;
collecting at least a third given amount of pictures for each person;
detecting a face area from the third given amount of pictures and extracting a fourth selected feature; and
training and acquiring a face classifier according to the fourth selected feature.

In an embodiment, after the step of determining content summary information of the video file and before the step of pushing the content summary information to a second terminal device logged in with a second user account associated with the first user account, the method further comprises steps of:
receiving geographical location information sent from the first terminal device; and
adding the geographical location information into the content summary information.

Thus, this embodiment allows the second user to be aware of the geographical location information in order to make the content recommendation more efficient.

In an embodiment, the step of determining content summary information of the video file comprises steps of:
determining the content summary information of the video file at a set period;
after the step of determining content summary information of the video file and before the step of pushing the content summary information to a second terminal device logged in with a second user account associated with the first user account, the method further comprises steps of:
determining whether the content summary information is consistent with content summary information determined in a previous set period; and
executing the step of pushing the content summary information to a second terminal device logged in with a second user account associated with the first user account if the content summary information is not consistent with content summary information determined in the previous set period.

Thus, this embodiment allows avoiding a repeated recommendation of the same content.

In an embodiment, the method further comprises steps of:
receiving a device change message sent from the second terminal device, the device change message designating a changed terminal device; and
sending the video file to the changed terminal device and designating a frame identifier for each video frame of the video file.

Thus, this embodiment allows sending the content to a terminal that is in real need of the content in order to increase the successes rate of the comment recommendation.

According to a second aspect of the invention, a method for providing a real-time video is provided, comprising steps of:

receiving content summary information pushed from a server, the content summary information being determined by the server according to a video file corresponding to a first user account, the video file being acquired by the server by receiving in real time a video frame sent from a first terminal device and carried with the first user account and a frame identifier, and by storing the video frame according to the frame identifier;
displaying the content summary information;
sending a video acquisition request for acquiring the video file to the server after a selection of the content summary information is detected so that the server sends the video file; and
receiving the video file.

In an embodiment, the method further comprises steps of:
receiving a device change instruction from a second user, the device change instruction designating a changed terminal device;
sending a device change message to the server, the device change message designating the changed terminal device, so that the server sends the video file to the changed terminal device and designates a frame identifier for each video frame of the video file; or sending the video file to the changed terminal device and designating a frame identifier for each video frame of the video file.

According to a third aspect of the invention, a device for providing a real-time video is provided, comprising:
a first receiver unit, configured to receive in real time a video frame sent from a first terminal device and carried with a first user account and a frame identifier;
a storage unit, configured to store the video frame in a video file corresponding to the first user account according to the frame identifier;
a first determination unit, configured to determine content summary information of the video file;
a pusher unit, configured to push the content summary information to a second terminal device logged in with a second user account associated with the first user account, so that the second terminal device displays the content summary information and sends a video acquisition request for acquiring the video file after a selection of the content summary information is detected;
a second receiver unit, configured to receive the video acquisition request; and
a first sender unit, configured to send the video file to the second terminal device.

In an embodiment, the storage unit comprises:
a searcher subunit, configured to search for a video file corresponding to the first user account;
a storage subunit, configured to store the video frame, if a video file corresponding to the first user account is searched out, in the video file according to the frame identifier; and to create a video file corresponding to the first user account and to save the video frame in the created video file if no video file corresponding to the first user account is searched out.

In an embodiment, the first determination unit comprises:
an extraction subunit, configured to extract a first selected feature from each video frame of the video file;
an identification subunit, configured to identify the extracted first selected feature by using at least one classifier created in advance, thus acquiring an identification result corresponding to the at least one classifier and a credibility of the identification results; and
a combination subunit, configured to combine the first user account with the identification result of a highest credibility, thus acquiring the content summary information of the video file.

In an embodiment, the device further comprises:
a second determination unit, configured to determine a first given number of scenes;
a first collector unit, configured to collect at least a first given amount of pictures for each scene, the first given amount of pictures comprising at least a second given amount of interference pictures;
a first extracting unit, configured to extract a second selected feature from the first given amount of pictures; and
a first trainer unit, configured to train and acquire a scene classifier according to the second selected feature.

In an embodiment, the device further comprises:
a third determination unit, configured to determine a second given number of events;
a second collector unit, configured to collect at least a third given number of pictures for each event, the third given number of pictures comprising at least a fourth given number of interference pictures;
a second extracting unit, configured to extract a third selected feature from the third given number of pictures; and
a second trainer unit, configured to train and acquire an event classifier according to the third selected feature.

In an embodiment, the device further comprises:
a fourth determination unit, configured to determine a fourth given number of persons;
a third collector unit, configured to collect at least a third given amount of pictures for each person;
a third extracting unit, configured to detect a face area from a third given amount of pictures and extract a fourth selected feature; and
a third trainer unit, configured to train and acquire a face classifier according to the fourth selected feature.

In an embodiment, the device further comprises:
a third receiver unit, configured to receive geographical location information sent from the first terminal device; and
an addition unit, configured to add the geographical location information into the content summary information.

In an embodiment, the first determination unit comprises:
a determination subunit, configured to determine the content summary information of the video file at a set period, and
to determine whether the content summary information is consistent with content summary information determined in a previous set period; and
to trigger the pusher unit to push the content summary information to the second terminal device logged in with the second user account associated with the first user account if the content summary information is not consistent with the content summary information determined in the previous set period.

In an embodiment, the device further comprises:
a fourth receiver unit, configured to receive a device change message sent from the second terminal device, the device change message designating a changed terminal device; and
a second sender unit, configured to send the video file to the changed terminal device and designate a frame identifier of a video frame for initial playing.

According to a fourth aspect of the invention, a device for providing a real-time video is provided, comprising:
a first receiver unit, configured to receive content summary information pushed from a server, the content summary information being determined by the server according to a video file corresponding to a first user account, the video file being acquired by the server by receiving in real time a video frame sent from a first terminal device and carried with the first user account and a frame identifier, and by storing the video frame according to the frame identifier;
a display unit, configured to display the content summary information;
a first sender unit, configured to send a video acquisition request for acquiring the video file to the server after a selection of the content summary information is detected; and
a second receiver unit, configured to receive the video file.

In an embodiment, the device further comprises:
a third receiver unit, configured to receive a device change instruction from a second user, the device change instruction designating a changed terminal device; and
a second sender unit, configured to send a device change message to the server, the device change message designating the changed terminal device, so that the server sends the video file to the changed terminal device and designating a frame identifier for each video frame of the video file; or to send the video file to the changed terminal device and designate a frame identifier for each video frame of the video file.

According to a fifth aspect of the invention, a server is provided, comprising:
a processor; and
a memory configured to store instruction executable by the processor;
wherein, the processor is configured to:
receive in real time a video frame sent from a first terminal device and carried with a first user account and a frame identifier;
store the video frame in a video file corresponding to the first user account according to the frame identifier;
determine content summary information of the video file;
push the content summary information to a second terminal device logged in with a second user account associated with the first user account, so that the second terminal device displays the content summary information and sends a video acquisition request for acquiring the video file after a selection of the content summary information is detected; and
send the video file to the second terminal device after the video acquisition request is received.

According to the seventh aspect of the invention, a terminal device is provided, comprising:
a processor; and
a memory configured to store instruction executable by the processor;
wherein, the processor is configured to:
receive content summary information pushed from a server, the content summary information being determined from the server according to a video file corresponding to a first user account, the video file being acquired from the server by receiving in real time a video frame sent from a first terminal device and carried with the first user account and a frame identifier, and by storing the video frame according to the frame identifier;
display the content summary information;
send a video acquisition request for acquiring the video file after a selection of the content summary information is detected; and
receive the video file.

A computer program is provided according to an eighth aspect of the invention. The computer program performs the steps of the method for providing a real-time video when this program is executed by a computer.

This program can use any programming language and take the form of source code, object code or a code intermediate between source code and object code, such as a partially compiled form, or any other desirable form.

The invention is also directed to a computer-readable information medium containing instructions of the computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

In a particular embodiment, the information medium can be an integrated circuit in which the program is incorporated, the circuit being adapted to execute the method in question or to be used in its execution.

The technical solution provided by embodiments of the invention may comprise following beneficial effects: a server receives in real time a video frame sent by a first terminal device and carried with a first user account and a frame identifier, stores the video frame in a video file corresponding to the first user account according to the frame identifier, determines content summary information of the video file and pushes the content summary information to a second terminal device logged in with a second user account associated with the first user account so that the second terminal device displays the content summary information and sends a video acquisition request for acquiring the video file after a selection of the content summary information is detected; and the server sends the video file to the second terminal device after the video acquisition request is received. As the second terminal device may display the content summary information, a second user may learn concrete content of a real-time video according to the content summary information, and may select the content summary information if the second user wants to watch the real-time video. After the selection of the content summary information is detected, the second terminal device may send a video acquisition request to the server for acquiring the video file of the real-time video, thus ensuring the real-time video is accessible to a user in demand and improving user experience. The content summary information is neglected if the second user does not want to watch the real-time video, thus ensuring a user without demand determines not to watch the real-time video according to the content summary information, in this way, it is unnecessary f to establish a communication connection to transmit a real-time video to the second terminal device for with the video is undesirable, thus avoiding waste of network resources and improving user experience.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flowchart illustrating a method for providing a real-time video where an executive body is a server according to an exemplary embodiment.
Fig. 2 is an architecture diagram illustrating a system for providing a real-time video according to an exemplary embodiment.
Fig. 3 is a flowchart illustrating a method for providing a real-time video where an executive body is a terminal device according to an exemplary embodiment.
Fig. 4 is a flowchart illustrating a method for providing a real-time video according to an exemplary embodiment.
Fig. 5 is a block diagram illustrating a device for providing a real-time video corresponding to Fig. 1 according to an exemplary embodiment.
Fig. 6 is a block diagram illustrating a device for providing a real-time video corresponding to Fig. 3 according to an exemplary embodiment.
Fig. 7 is a block diagram illustrating a terminal device according to an exemplary embodiment.
Fig. 8 is a block diagram illustrating a server according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

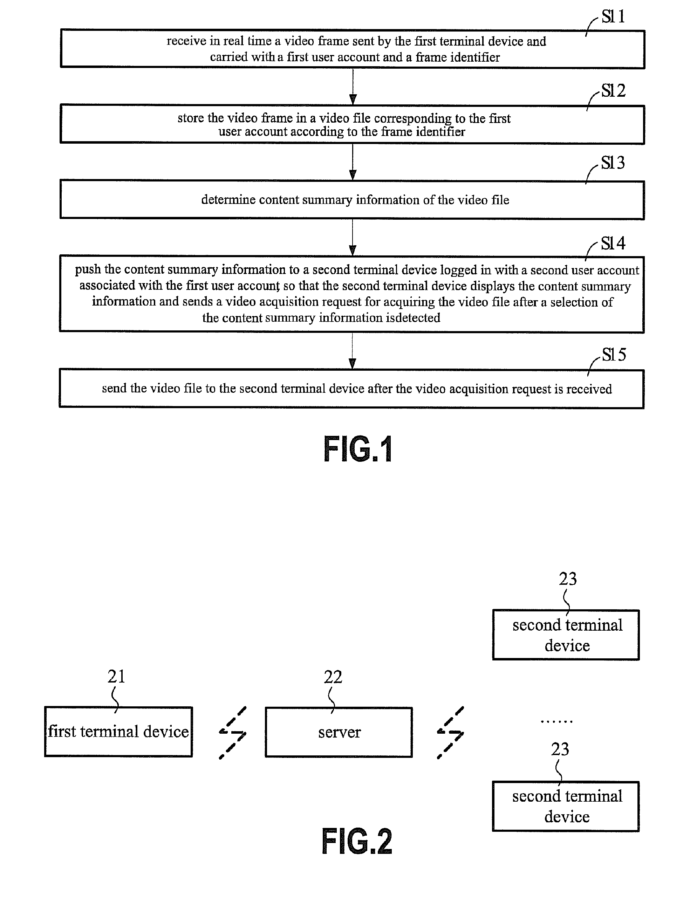

Fig. 1 is a flowchart illustrating a method for providing a real-time video according to an exemplary embodiment. The method for providing a real-time video may be implemented on the basis of a system for providing a real-time video, whose architecture is as shown in Fig. 2, including a first terminal device 21, a server 22 and a second terminal device 23. The server 22 may be connected to a plurality of first terminal devices 21 and second terminal devices 23. However, Fig. 2 only shows one first terminal device 21 and two second terminal devices 23. The server 22 is connected with the first terminal device 21 and the second terminal devices 23 through a wireless network (herein a wireless network connection is taken as an example for description. In practical application, these devices may also be connected through a wired network, to which the invention makes no restriction). The first terminal device 21 may upload a video in real time to the server 22, and the server 22 may store the video received and send content summary information of the video to the second terminal devices 23. As shown in Fig. 1, the method for providing a real-time video is applied to the server which may execute the method for each first terminal device. The method includes following steps.

In Step S11, a video frame sent by the first terminal device and carried with a first user account and a frame identifier is received in real time.

A first user may register on the server with a first user account in advance. The first user may log in the server with the first user account when the first user uses the first terminal device to take a video and share it in real time. Then the first terminal device may send to the server in real time each taken video frame carried with the first user account and a frame identifier.

Wherein, a video frame may have a variety of frame identifiers. Two frame identifiers are taken as examples hereinafter: one is a serial number of each video frame provided by the first terminal device during the shooting, the other one is a shooting time recorded by the first terminal device during the shooting.

The server may receive in real time the video frame sent by the first terminal device.

In Step S12, the video frame is stored in a video file corresponding to the first user account according to the frame identifier.

The server may simultaneously receive video frames sent by a plurality of first terminal devices, search for a video file according to the first user account, and then store the video frame in the corresponding video file according to the frame identifier. In the invention, a video file comprises video frames that are received in real time (streaming) by the server from the first terminal device.

In Step S13, content summary information of the video file is determined.

Content summary information may summarize the main content of the corresponding video file.

In Step S14, the content summary information is pushed (or sent) to a second terminal device logged in with a second user account associated with the first user account, so that the second terminal device displays the content summary information and sends a video acquisition request for acquiring the video file after a selection of the content summary information is detected.

Generally the first user account may be associated with a plurality of second user accounts. And different applications may have different associated modes. For example, regarding to QQ™(an instant messaging application), a plurality of friends may be set for the first user account, and these friends are the second user accounts associated with the first user account; for another example, regarding to WeChat™ (a social network application), a friend network may be set for the first user account, and user accounts in the friend network are the second user accounts associated with the first user account.

The server may acquire the second user account associated with the first user account, and then push the determined content summary information to the second terminal device logged in the server with the second user account. The server may either add the content summary information into a link and push the link to the second terminal device, or directly push the content summary information to the second terminal device. The second terminal device may display the content summary information so as to provide it to the second user. The second terminal device may open the content summary information to display it by different ways as the server may push the content summary information in different ways, for example, by the way of clicking links, or by the way of clicking buttons.

The second user may neglect the content summary information if the second user does not want to watch the video. Otherwise, the second user may select the content summary information if the second user wants to watch the video. If the second terminal device is connected to peripheral devices such as a mouse or a keyboard and the like, the second user may select the content summary information by means of those peripheral devices. If the second terminal device is provided with a touch screen, the second user may select the content summary information directly by fingers or a stylus.

After detecting that the content summary information is selected, the second terminal device determines that the second user wants to watch the video and sends a video acquisition request to the server so as to request the server to send the video file.

In Step S15, the video file is sent to the second terminal device after the video acquisition request is received. In this step the video file comprises video frames received in real time by the server till the reception of the video acquisition request. In the technical solution, the server receives in real time a video frame sent by a first terminal device and carried with a first user account and a frame identifier, stores the video frame in a video file corresponding to the first user account according to the frame identifier, determines content summary information of the video file and pushes the content summary information to a second terminal device logged in with a second user account associated with the first user account so that the second terminal device displays the content summary information and sends a video acquisition request for acquiring the video file after a selection of the content summary information is detected; and the server sends the video file to the second terminal device after the video acquisition request is received. As the second terminal device may display the content summary information, the second user may learn the content of the real-time video according to the content summary information, and may select the content summary information if the second user wants to watch the real-time video. After detecting that the content summary information is selected, the second terminal device may send a video acquisition request to the server for acquiring the video file of the real-time video, thus ensuring the real-time video is accessible to a user in demand and improving user experience. The content summary information is neglected if the second user does not want to watch the real-time video, thus ensuring a user without demand determines not to watch the real-time video according to the content summary information. In this way, it is unnecessary to establish a communication connection to transmit a real-time video to the second terminal device for with the video is undesirable, thus avoiding waste of network resources and improving user experience.

In a particular embodiment, the Step S12 of storing the video frame in a video file corresponding to the first user account according to the frame identifier includes:
searching for a video file corresponding to the first user account;
storing the video frame, if the video file corresponding to the first user account is searched out, in the video file according to the frame identifier; and
creating a video file corresponding to the first user account and storing the video frame in the created video file if no video file corresponding to the first user account is searched out.

After receiving the video frame carried with the first user account and the frame identifier, the server firstly searches for a video file corresponding to the first user account. If the video frame is a first video frame of the video shot by the first terminal device, the video file corresponding to the first user account has not been created yet on the server. Under this circumstance, it is impossible to find the video file corresponding to the first user account, and it is necessary to create such a video file and then store the video frame into the created video file. However, if the video frame is not the first video frame of the video shot by the first terminal device, the video file corresponding to the first user account has been created on the server. Under this circumstance, it is possible to find the video file corresponding to the first user account, and the video frame is directly stored in the video file searched out.

In a particular embodiment, the Step S13 of determining content summary information of the video file includes:
extracting a first selected feature from each video frame of the video file;
identifying the extracted first selected feature by using at least one classifier created in advance, thus acquiring an identification result corresponding to each classifier and credibility thereof; and
combining the first user account and the identification result with the highest credibility, thus acquiring the content summary information of the video file.

The video file corresponding to the first user account generally includes a plurality of video frames. A first selected feature to be extracted from the video frames may be determined. The first selected feature is a feature to be identified (or marked) with a plurality of classifiers created in advance for identifying. Then the first selected feature is extracted from each video frame of the video file, and the plurality of classifiers created in advance are used to identify the extracted first selected feature, thus acquiring an identification result and a credibility thereof.

Wherein, the classifiers may include a scene classifier, an event classifier and a face classifier, etc. Assuming that a feature to be extracted for the scene classifier is a color histogram feature, a feature to be extracted for the event classifier is an SIFT (Scale-Invariant Feature Transform) feature, and a feature to be extracted for the face classifier is an LBP (Local Binary Patterns) feature, then, the first selected feature may include the color histogram feature, the SIFT feature or the LBP feature.

After the extracted first selected feature is identified by using at least one classifier created in advance, an identification result and a credibility thereof may be acquired for each classifier. The server may acquire an identification result with a highest credibility and then combine (or associate) the first user account with the identification result of the highest credibility, thus acquiring the content summary information of the video file. A credibility may be (but not limited to) an arbitrary number between 0 and 1. For example, the scene classifier corresponds to an identification result A (for example, a birthday celebrating scene...) and a credibility of 80%; the event classifier corresponds to an identification result B (for example, a concert event...) and a credibility of 50%; the face classifier corresponds to an identification result C (for example, a face of an actor/actress) and a credibility of 90%. The content summary information acquired finally for the video file corresponding to the first user account may be "the first user account meets with an actor/actress C". Herein only one combination mode for acquiring the content summary information of the video file is described, but many other combination modes are also available, which will not be elaborated herein.

Detailed description is made hereinafter with reference to the process for creating the scene classifier, the event classifier and the face classifier.

For the first one, the process for creating (or training) the scene classifier may be as follows:
determining a first given number of scenes;
collecting at least a first given amount of pictures for each scene, the first given amount of pictures include at least a second given amount of interference pictures;
extracting a second selected feature from having the first given amount of pictures; and
training and acquiring the scene classifier according to the second selected feature.

The first given number of scenes may be determined (or preset) in advance. For example, determined scenes may include scenes in a basketball match: offensive rebounds, defensive rebounds, assists, fouls, steals and so on; and other scenes may be determined, which are not illustrated herein. A first given amount of pictures are collected for each determined scene, and the more the pictures are collected, the higher the accuracy of the created scene classifier is. The first given amount of pictures include the second given amount of interference pictures. The second selected feature is selected from the first given amount of pictures, for example, the second selected feature such as a color histogram feature and so on. The more features are selected, the higher the accuracy of the created scene classifier is. And the scene classifier may be trained and acquired according to the second selected feature.

For the second one, the process for creating the event classifier may be as follows:
determining a second given number of events;
collecting at least a third given number of pictures for each event, the third given number of pictures include at least a fourth given number of interference pictures;
extracting a third selected feature from the third given number of videos; and
training and acquiring an event classifier according to the third selected feature.

Similarly, the second given number of events may be determined in advance. For example, a basketball match, a football match, and filming, etc. The third given number of pictures are collected for each event, and the more the pictures are collected, the higher the accuracy of the created event classifier is. The third given number of pictures include a fourth given number of interference pictures. The third selected feature is selected from the third given number of pictures, for example, the SIFT feature and so on. The more features are selected, the higher the accuracy of the created event classifier is. And the event classifier may be trained and acquired according to the third selected feature.

For the third one, the process for creating the face classifier may be as follows:
determining a fourth given number of persons;
collecting pictures having at least a third given amount of sheets for each person;
detecting a face area from the pictures having the third given amount of sheets and extracting a fourth selected feature; and
training and acquiring a face classifier according to the fourth selected feature.

The fourth given number of persons may be determined in advance. Third given amount of pictures are collected for each person (for example, politicians, artists, friends...), and the more pictures are collected, the higher the accuracy of the created face classifier is. The fourth selected feature is selected from the third given amount of pictures, for example, the LBP feature and so on. The more the features are selected, the higher the accuracy of the created face classifier is. And the face classifier may be trained and created according to the fourth selected feature.

Wherein, the foregoing the first given number, the second given number, the third given number, the first given amount, the second given amount, the third given amount, the first selected feature, the second selected feature, the third selected feature and the fourth selected feature may be selected according to actual needs.

In a particular embodiment, after the Step S13 of determining content summary information of the video file and before the Step S14 of pushing the content summary information to a second terminal device logged in with a second user account associated with the first user account, the method further includes:
receiving geographical location information sent by the first terminal device; and
adding the geographical location information into the content summary information.

The first terminal device may acquire geographical location information, for example, GPS (Global Positioning System) information, and then send the geographical location information to the server which may add the geographical location information into the content summary information.

Continuing to take the above example, assuming that the geographical location information is D. After adding the geographical location information D in the content summary information, the content summary information acquired is "the first user account meets with actor/actress C at D", thus the information relating to the real-time video may be described more accurately.

In a particular embodiment, the Step S13 of determining content summary information of the video file includes:
determining the content summary information of the video file at a set period.

The content summary information relating to the video file may be not changed when a new video frame is added in the video file. Therefore, a period may be set for determining (or updating) the content summary information of the video file. The set period may be set according to actual needs, for example, 5 seconds, 10 seconds and 15 seconds, etc.

After the Step S13 of determining content summary information of the video file and before the Step S14 of pushing the content summary information to a second terminal device logged in with a second user account associated with the first user account, the method further includes:
determining whether the content summary information is consistent with content summary information determined in a previous set period; and
executing the step of pushing the content summary information to the second terminal device logged in with the second user account associated with the first user account if the content summary information is inconsistent with the content summary information determined in the previous set period.

Accordingly, before pushing the content summary information to the second terminal device logged in with the second user account associated with the first user account, the server may firstly determine whether the content summary information determined within the current set period is consistent with the content summary information determined in the previous set period, for example by caching the last content summary information and comparing the current content summary information with the cached one, and push the content summary information determined within the current set period to the second terminal device if they are not in consistence. Otherwise, it is unnecessary to push the content summary information determined within the current set period to the second terminal device if they are inconsistence.

By adding this judgment process, it is possible to avoid repeating pushing the same content summary information to the second terminal device, thus improving user experience.

In a particular embodiment, the method also includes steps of:
receiving a device change message sent by the second terminal device, the device change message designating a changed terminal device; and
sending the video file to the changed terminal device and designating a frame identifier of a video frame for initial playing.

A second user using the second terminal device sometimes needs to change the terminal device to use. For example, originally the second user is watching a video by using a TV set in a living room, and needs to change the terminal device to use if he/she wants to go to the bedroom. The second terminal device may send a device change message to the server. After receiving the device change message, the server may stop sending the video file to the second terminal device, and begin sending the video file to the changed terminal device for example from the start or the stop position of the video file, and designate a frame identifier (for example, a time indicator) for each video frame when sending the video file to the changed terminal device, thus ensuring the user to continue watching the video from any video frame that he wishes by choosing the frame identifier, thus improving user experience.

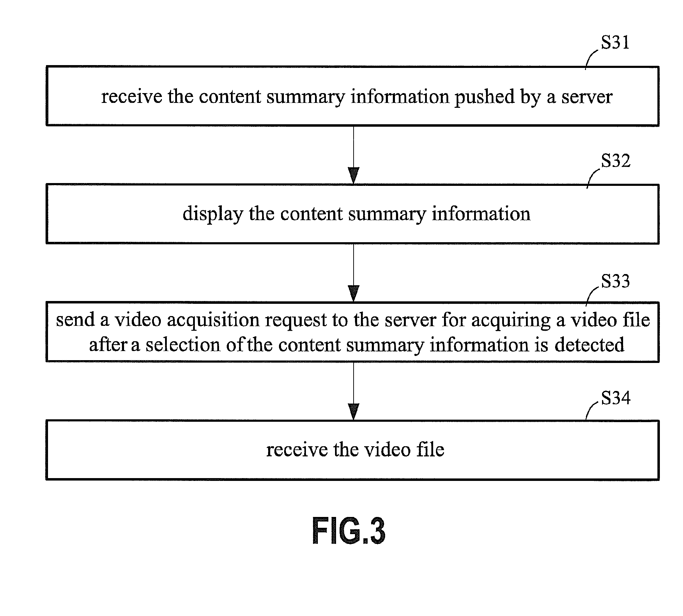

Fig. 3 is a flowchart illustrating a method for providing a real-time video according to an exemplary embodiment. As shown in Fig. 3, the method is applied to a terminal device serving as the second terminal device in the system for providing a real-time video as shown in Fig. 2, including following steps.

In Step S31, content summary information pushed by a server is received, and the content summary information is determined by the server according to the video file corresponding to the first user account, the video file being acquired by the server which receives in real time a video frame sent by the first terminal device and carried with the first user account and a frame identifier and which stores the video frame according to the frame identifier.

In Step S32, the content summary information is displayed.

In Step S33, a video acquisition request for acquiring the video file is sent to the server after a selection of the content summary information is detected.

In Step S34, the video file is received.

In this embodiment, the server receives in real time a video frame (sent by a first terminal device) carrying a first user account and a frame identifier, stores the video frame in a video file corresponding to the first user account according to the frame identifier, determines content summary information of the video file and pushes the content summary information to a second terminal device logged in with a second user account associated with the first user account so that the second terminal device displays the content summary information and sends a video acquisition request for acquiring the video file after detecting that the content summary information is selected; and the server sends the video file to the second terminal device after receiving the video acquisition request. As the second terminal device may display the content summary information, a second user may learn the content of a real-time video according to the content summary information, and may select the content summary information if the second user wants to watch the real-time video. After detecting the content summary information is selected, the second terminal device may send a video acquisition request to the server for acquiring the video file of the real-time video, thus ensuring the real-time video is accessible to a user in demand and improving user experience. The content summary information may be neglected if the second user does not want to watch the real-time video, thus ensuring a user without demand determines not to watch the real-time video according to the content summary information. In this way, it is unnecessary for the user to determine not to watch the real-time video after establishing a communication connection between the second terminal device and the first terminal device and watching the real-time video, thus avoiding waste of network resources and improving user experience.

In a particular embodiment, a second user using the second terminal device sometimes needs to change the terminal device to use. For example, originally the second user is watching a video by using a TV set in a living room, and needs to change the terminal device to use if he/she wants to go to the bedroom. The switching method may include following two modes.

In the first mode, a device change instruction is received from a second user, and the device change instruction designates a changed terminal device; and
a device change message is sent to the server, and the device change message designates the changed terminal device so that the server may send the video file to the changed terminal device and designate a frame identifier of a video frame for initial playing.

During playing a real-time video, the second terminal device may provide a device change function. After the second user selects the function, the second terminal device may receive a device change instruction which designates a changed terminal device. The second terminal device may send to the server a device change message which designates the changed terminal device. After receiving the device change message, the server may send the video file to the changed terminal device and designate a frame identifier of a video frame for initial playing, thus ensuring the second user to continue watching the video and improving user experience.

In the second mode, a device change instruction is received from a second user, and the device change instruction designates a changed terminal device; and
the video file is sent to the changed terminal device and designates a frame identifier of a video frame for initial playing.

During playing a real-time video, the second terminal device may provide a device change function. After a second user selects the function, the second terminal device may receive a device change instruction which designates a changed terminal device. The second terminal device may send a video file saved therein to the changed terminal device and designate a frame identifier of a video frame for initial playing, thus ensuring the second user to continue watching the video and improving user experience.

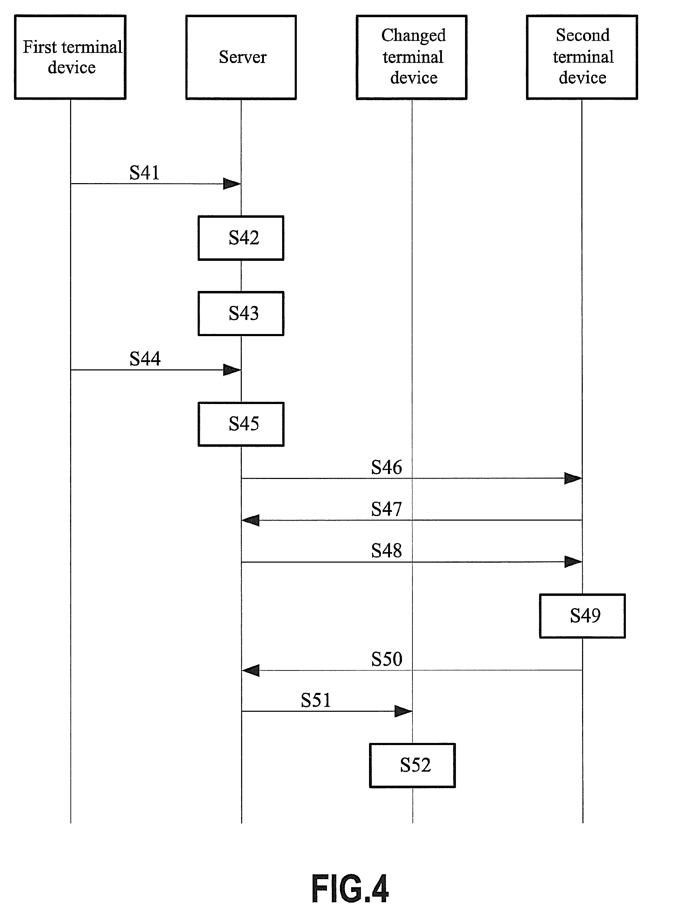

Fig. 4 is a flow chart illustrating another method for providing a real-time video according to an exemplary embodiment, and the method is applied to the system for providing a real-time video as shown in Fig.2. As shown in Fig.4, the method includes following steps.

In Step S41, the first terminal device sends in real time to the server a video frame carrying a first user account and a frame identifier.

In Step S42, the server receives in real time the video frame (sent by the first terminal device) carrying the first user account and the frame identifier and searches for a video file corresponding to the first user account; stores the video frame, if the video file corresponding to the first user account is searched out, in the video file according to the frame identifier; or creates a video file corresponding to the first user account and stores the video frame in the created video file if no video file corresponding to the first user account is searched out.

In Step S43, the server extracts a first selected feature from each video frame of the video file at a set period, identifies the extracted first selected feature by using at least one classifier created in advance, thus acquiring an identification result corresponding to each classifier and a credibility thereof, and combines the first user account and the identification result with a highest credibility, thus acquiring content summary information of the video file.

In Step S44, the first terminal device sends geographical location information to the server.

In Step S45, the server receives the geographical location information sent by the first terminal device, and adds the geographical location information into the content summary information.

In Step S46, the server pushes the content summary information to a second terminal device logged in with a second user account associated with the first user account if the content summary information is inconsistent with the content summary information determined in a previous set period.

There may be a plurality of second terminal devices. And one second terminal device is taken as an example for illustration hereinafter.

In Step S47, the second terminal device displays the content summary information and sends a video acquisition request for acquiring the video file after detecting the content summary information is selected.

In Step S48, the server sends the video file to the second terminal device after receiving the video acquisition request.

In Step S49, the second terminal device displays the video file.

In Step S50, the second terminal device receives a device change instruction from a second user and sends a device change message to the server, and both the device change instruction and device change message designate a changed terminal device.

In Step S51, the server receives a device change message sent by the second terminal device, sends the video file to the changed terminal device and designates a frame identifier of a video frame for initial playing.

In Step S52, the changed terminal device receives the video file and starts playing the video file from the video frame corresponding to the designated frame identifier.

In the solution, as the second terminal device may display the content summary information, a second user may learn the content of a real-time video according to the content summary information, and may select the content summary information if the second user wants to watch the real-time video. After detecting the content summary information is selected, the second terminal device may send a video acquisition request to the server for acquiring the video file of the real-time video, thus ensuring the real-time video is accessible to a user in demand and improving user experience. The content summary information may be neglected if the second user does not want to watch the real-time video, thus ensuring a user without demand determines not to watch the real-time video according to the content summary information. In this way, it is unnecessary for the user to determine not to watch the real-time video after establishing a communication connection between the second terminal device and the first terminal device and watching the real-time video, thus avoiding waste of network resources and improving user experience.

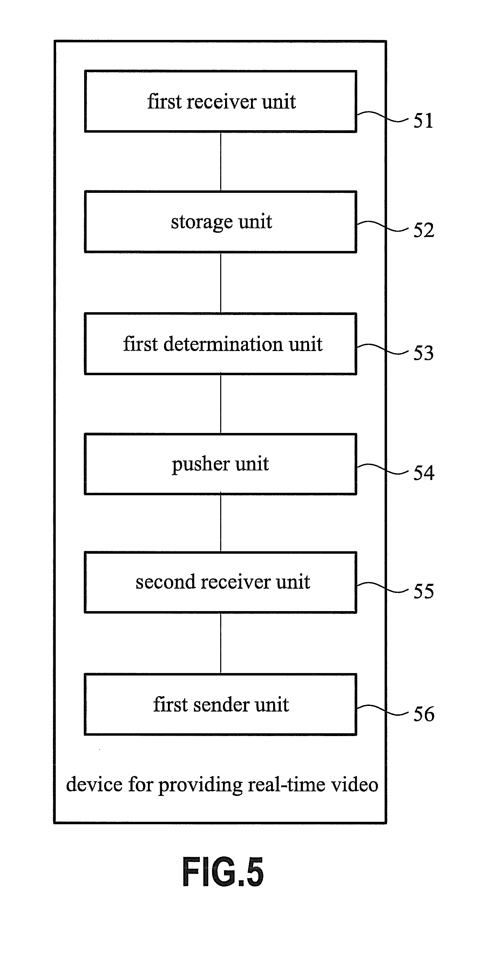

Fig. 5 is a block diagram illustrating a device for providing a real-time video corresponding to the method for providing a real-time video as shown in Fig. 1 according to an exemplary embodiment. As shown in Fig. 5, the device includes a first receiver unit 51, a storage unit 52, a first determination unit 53, a pusher unit 54, a second receiver unit 55 and a first sender unit 56.

The first receiver unit 51 is configured to receive in real time a video frame (sent by a first terminal device) carrying a first user account and a frame identifier.

The storage unit 52 is configured to store the video frame in a video file corresponding to the first user account according to the frame identifier.

The first determination unit 53 is configured to determine content summary information of the video file.

The pusher unit 54 is configured to push the content summary information to a second terminal device logged in with a second user account associated with the first user account so that the second terminal device displays the content summary information and sends a video acquisition request for acquiring the video file after detecting the content summary information is selected.

The second receiver unit 55 is configured to receive the video acquisition request.

The first sender unit 56 is configured to send the video file to the second terminal device.

In a particular embodiment, the storage unit 52 includes a searcher subunit and a storage subunit.

The searcher subunit is configured to search for a video file corresponding to the first user account.

The storage subunit is configured to store the video frame, if the video file corresponding to the first user account is searched out, in the video file according to the frame identifier; or to create a video file corresponding to the first user account and store the video frame in the created video file if no video file corresponding to the first user account is searched out.

In a particular embodiment, the first determination unit 53 includes an extraction subunit, an identification subunit and a combination subunit.

The extraction subunit is configured to extract a first selected feature from each video frame of the video file.

The identification subunit is configured to identify the extracted first selected feature by using at least one classifier created in advance, thus acquiring identification results corresponding to each classifier and a credibility thereof.

The combination subunit is configured to combine the first user account and the identification result with a highest credibility, thus acquiring the content summary information of the video file.

In a particular embodiment, the device also includes a second determination unit, a first collector unit, a first extracting unit and a first trainer unit.

The second determination unit is configured to determine a first given number of scenes.

The first collector unit is configured to collect at least a first given amount of pictures for each scene, the first given amount of pictures include at least a second given amount of interference pictures.

The first extracting unit is configured to extract a second selected feature from the pictures having the first given amount of sheets.

The first trainer unit is configured to train and acquire a scene classifier according to the second selected feature.

In a particular embodiment, the device also includes a third determination unit, a second collector unit, a second extracting unit and a second trainer unit.

The third determination unit is configured to determine a second given number of events.

The second collector unit is configured to collect at least a third given number of pictures for each event, the third given number of pictures include at least a fourth given number of interference pictures.

The second extracting unit is configured to extract a third selected feature from the third given number of pictures.

The second trainer unit is configured to train and acquire an event classifier according to the third selected feature.

In a particular embodiment, the device also includes a fourth determination unit, a third collector unit, a third extracting unit and a third trainer unit.

The fourth determination unit is configured to determine a fourth given number of persons.

The third collector unit is configured to collect pictures having at least a third given amount of sheets for each person.

The third extracting unit is configured to detect a face area from the pictures having the third given amount of sheets and extract a fourth selected feature.

The third trainer unit is configured to train and acquire a face classifier according to the fourth selected feature.

In a particular embodiment, the device also includes a third receiver unit and an addition unit.

The third receiver unit is configured to receive geographical location information sent by the first terminal device.

The addition unit is configured to add the geographical location information into the content summary information.

In a particular embodiment, the first determination unit 53 includes a determination subunit.

The determination subunit is configured to determine the content summary information of the video file at a set period, and

determine whether the content summary information is consistent with content summary information determined in a previous set period; and
to execute the step of pushing the content summary information to a second terminal device logged in with a second user account associated with the first user account if the content summary information is inconsistent with the content summary information determined in the previous set period.

In a particular embodiment, the device also includes a fourth receiver unit and a second sender unit.

The fourth receiver unit is configured to receive a device change message sent by the second terminal device, the device change message designating a changed terminal device.

The second sender unit is configured to send the video file to the changed terminal device and designate a frame identifier of a video frame for initial playing.

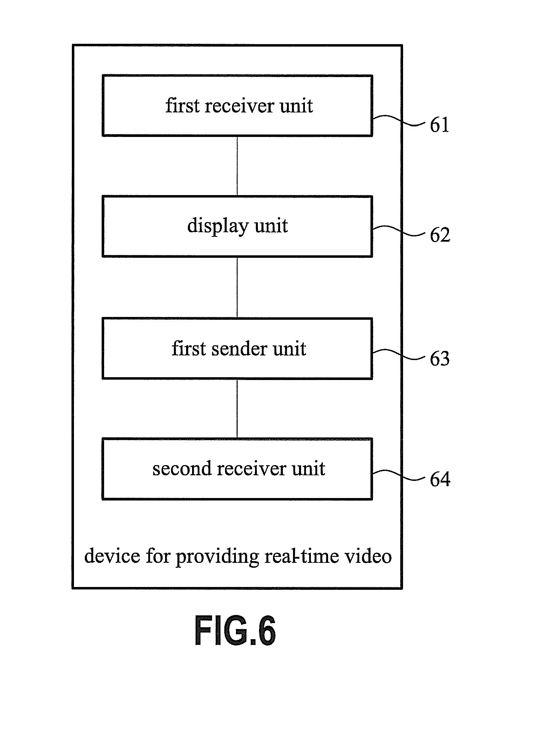

Fig. 6 is a block diagram illustrating a device for providing a real-time video corresponding to the method for providing a real-time video as shown in Fig. 3 according to an exemplary embodiment. As shown in Fig. 6, the device includes a first receiver unit 61, a display unit 62, a first sender unit 63 and a second receiver unit 64.

The first receiver unit 61 is configured to receive content summary information pushed by a server, the content summary information is determined by the server according to the video file corresponding to the first user account, and the video file is acquired by the server which receives in real time a video frame sent by the first terminal device and carried with the first user account and a frame identifier, and which stores the video frame according to the frame identifier.

The display unit 62 is configured to display the content summary information.

The first sender unit 63 is configured to send a video acquisition request for acquiring the video file to the server after detecting that the content summary information is selected so that the server may send the video file.

The second receiver unit 64 is configured to receive the video file.

In a particular embodiment, the device also includes a third receiver unit and a second sender unit.

The third receiver unit is configured to receive a device change instruction from a second user, the device change instruction designating a changed terminal device.

The second sender unit is configured to send a device change message to the server, the device change message designates the changed terminal device so that the server sends the video file to the changed terminal device and designates a frame identifier of a video frame for initial playing; or to send the video file to the changed terminal device and designate a frame identifier of a video frame for initial playing.

With regard to the device in the above embodiment, detailed description of specific modes for conducting operation of modules has been made in the embodiment related to the method, thus no detailed illustration will be made herein.

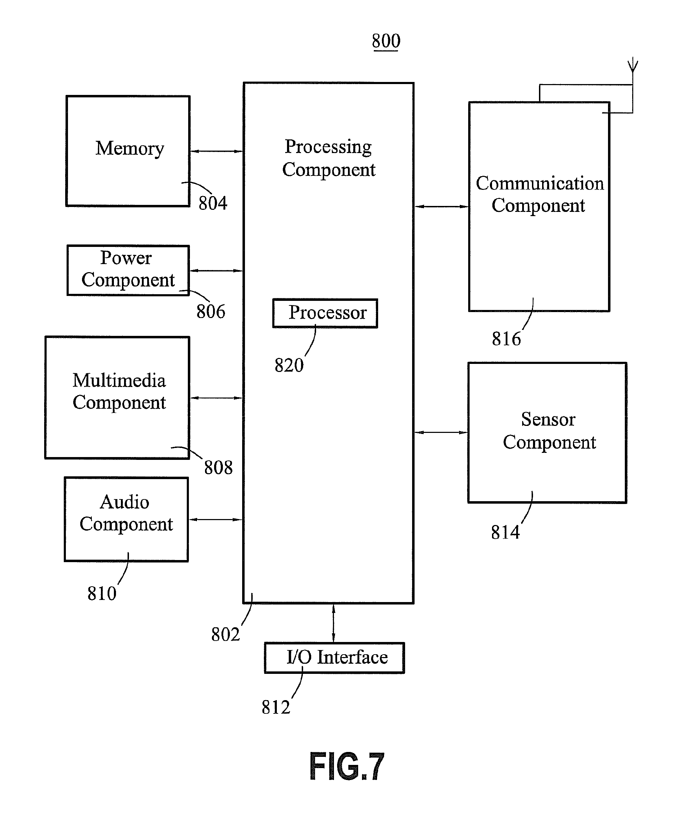

Fig. 7 is a block diagram illustrating a device 800 for providing a real-time video according to an exemplary embodiment. For example, the device 800 may be a mobile telephone, a computer, a digital broadcasting terminal, a message transceiver device, a games console, a tablet device, a medical device, a fitness facility, a PDA (personal digital assistant) and the like.

Referring to Fig.7, the device 800 may include one or a plurality of components as below: a processor component 802, a memory 804, a power supply component 806, a multimedia component 808, an audio component 810, an input/output (I/O) interface 812, a sensor component 814 and a communication component 816.

The processor component 802 generally controls the overall operation of the device 800, such as display, telephone call, data communication, and operation associated with camera operation and record operation. The processor component 802 may include one or a plurality of processors 820 for executing instructions so as to complete steps of above method in part or in whole. In addition, the processor component 802 may include one or a plurality of modules for purpose of interaction between the processor component 802 and other components. For example, the processor component 802 may include a multimedia module for purpose of interaction between the multimedia component 808 and the processor component 802.

The memory 804 is configured to store various types of data so as to support the operation of the device 800. Examples of the data include any application program or approach for operation on the device 800, including contact data, phonebook data, message, picture and video, etc. The memory 804 may be implemented by any type of volatile or non-volatile memory device or combination thereof, such as static random access memory (SRAM), electrically erasable programmable read-only memory (EEPROM), erasable programmable read only memory (EPROM), programmable read-only memory (PROM), read-only memory (ROM), magnetic memory, flash memory, magnetic disk or optical disk.

The power supply component 806 supplies power for various components of the device 800. The power supply component 806 may include a power management system, one or a plurality of power supplies, and other components associated with generation, management and distribution of power for the device 800.

The multimedia component 808 includes a screen between the device 800 and a user and for providing an output interface. In some embodiments, the screen may include an LCD (Liquid Crystal Display) and a touch panel (TP). If the screen includes a touch panel, the screen may be implemented as a touch screen for receiving input signal from users. The touch panel includes one or a plurality of touch sensors for sensing of touching, sliding and gestures on the touch panel. The touch sensor not only can sensor trip boundary of touching or sliding, but also can detect the duration and pressure related to the touching or sliding operation. In some embodiments, the multimedia component 808 includes a front-facing camera and/or a rear-facing camera. When the device 800 is under an operation mode, such as capture mode or video mode, the front-facing camera and/or the rear-facing camera may receive external multimedia data. Each of front-facing camera and rear-facing camera may be a fixed optical lens system or may have focal length and optical zoom capacity.

The audio component 810 is configured to output and/or input audio signal. For example, the audio component 810 includes a microphone (MIC); when the device 800 is under an operation mode such as call mode, record mode and speech recognition mode, the microphone is configured to receive external audio signal. The audio signal received may be further stored in the memory 804 or sent out by the communication component 816. In some embodiments, the audio component 810 also includes a loudspeaker for outputting audio signal.

The I/O interface 812 provides interface between the processor component 802 and peripheral interface modules, the peripheral interface modules may be a keyboard, a click wheel or buttons, etc. These buttons may include but not limited to: home button, volume button, start button and locking button.

The sensor component 814 includes one or a plurality of sensors for providing the device 800 with state evaluation from all aspects. For example, the sensor component 814 may detect the on/off state of the device 800, relative positioning of components, for example, the components include the displayer and keypads of the device 800; the sensor component 814 also may also detect the position change of the device 800 or a component thereof, the presence or absence of users' touch on the device 800, the direction or acceleration/deceleration of the device 800, and temperature variation of the device 800. The sensor component 814 may also include a proximity detector, which is configured to detect the presence of nearby objects without physical touch. The sensor component 814 may also include an optical sensor, such as CMOS or CCD image sensor for imaging application. In some embodiments, the sensor component 814 may also include an acceleration sensor, a gyro sensor, a magnetic sensor, a pressure sensor, or a temperature sensor.

The communication component 816 is configured to facilitate wired communication or wireless communication between the device 800 and other equipment. The device 800 is available for access to wireless network based on communication standards, such as WiFi, 2G or 3G, or combination thereof. In an exemplary embodiment, the communication component 816 receives by means of a broadcast channel the broadcast signal or broadcast-related information from external broadcast management systems. In an exemplary embodiment, the communication component 816 also includes a near field communication (NFC) module for promoting short-range communication. For example, the NFC module may be implemented on the basis of Radio Frequency Identification (RFID) Technology, Infrared Data Association (IrDA) Technology, Ultra-wide Bandwidth (UWB) Technology, Bluetooth (BT) Technology and other technologies.

In exemplary embodiments, the device 800 may be implemented by one or a plurality of application specific integrated circuits (ASIC), digital signal processors (DSP), digital signal processing equipment (DSPD), programmable logic devices (PLD), field programmable gate arrays (FPGA), controllers, microcontrollers, microprocessors or other electronic components, configured to execute the above methods.

In exemplary embodiments, a non-transitory computer-readable storage medium including instructions is also provided, for example, a memory 804 including instructions, which may be executed by the processors 820 of the device 800 so as to implement the above methods. For example, the non-transitory computer-readable storage medium may be ROM, random access memory (RAM), CD-ROM, magnetic tape, floppy disk and optical data storage device, etc.

A non-transitory computer-readable storage medium, wherein instructions in the storage medium are executed by the processor of a terminal device so that the terminal device may execute a method for providing a real-time video. The method includes:
receiving content summary information pushed by a server, the content summary information being determined by the server according to a video file corresponding to a first user account, the video file being acquired by the server which receives in real time a video frame sent by a first terminal device and carried with the first user account and a frame identifier and which stores the video frame according to the frame identifier;
displaying the content summary information;
sending a video acquisition request for acquiring the video file after detecting that the content summary information is selected; and
receiving the video file.

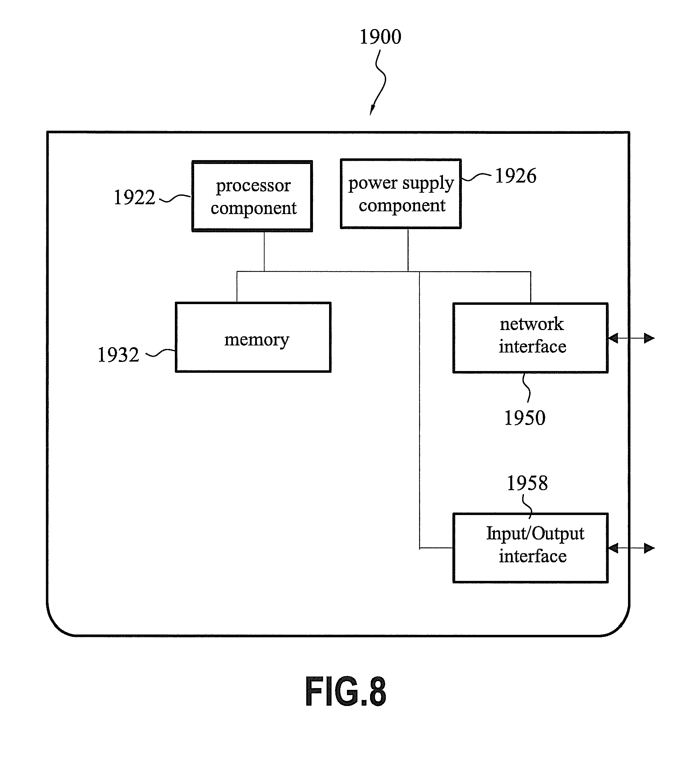

Fig. 8 is a block diagram illustrating a device for providing a real-time video 1900 according to an exemplary embodiment. For example, the device 1900 may be provided as a server. Referring to Fig.8, the device 1900 includes a processor component 1922, and further includes one or a plurality of processors, and memory resource represented by the memory 1932 and configured to store instructions executable by the processor component 1922, for example, application programs. The application program stored in the memory 1932 may include one or a plurality of modules each of which corresponds to a set of instructions. In addition, the processor component 1922 is configured to execute instructions so as to execute the foregoing method for providing a real-time video. And the method includes:
receiving in real time a video frame (sent by a first terminal device) carrying a first user account and a frame identifier;
storing the video frame in a video file corresponding to the first user account according to the frame identifier;
determining content summary information of the video file;
pushing the content summary information to a second terminal device logged in with a second user account associated with the first user account so that the second terminal device displays the content summary information and sends a video acquisition request for acquiring the video file after detecting the content summary information is selected; and
sending the video file to the second terminal device after receiving the video acquisition request.

The device 1900 may also include a power supply component 1926 configured to execute the power management of the device 1900, a wired or wireless network interface 1950 configured to connect the device 1900 to the network, and an input/output (I/O) interface 1958. The device 1900 can operate an operating system based on and stored in the memory 1932, for example, Windows Server™, Mac OS X™, Unix™, LinuxTM, FreeBSD™ or other similar operating systems.

Other embodiments of the invention will be apparent to those skilled in the art from consideration of the specification and practice of the invention disclosed here. This application is intended to cover any variations, uses, or adaptations of the invention following the general principles thereof and including such departures from the invention as come within known or customary practice in the art. It is intended that the specification and examples be considered as exemplary only, with a true scope and spirit of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for providing a real-time video, **characterized in** comprising steps of:
receiving (S11) in real time a video frame sent from a first terminal device and carried with a first user account and a frame identifier;
storing (S12) the video frame in a video file corresponding to the first user account according to the frame identifier;
determining (S13) content summary information of the video file;
pushing (S14) the content summary information to a second terminal device logged in with a second user account associated with the first user account, so that the second terminal device displays the content summary information and sends a video acquisition request for acquiring the video file after a selection of the content summary information is detected; and
sending (S15) the video file to the second terminal device after the video acquisition request is received.

2. The method of claim 1, **characterized in that**, the step of storing the video frame in a video file corresponding to the first user account according to the frame identifier comprises steps of:
searching for a video file corresponding to the first user account;
if a video file corresponding to the first user account is searched out, storing the video frame in the video file according to the frame identifier; or
if no video file corresponding to the first user account is searched out, creating a video file corresponding to the first user account and saving the video frame in the created video file.

3. The method of claim 1 or 2, **characterized in that**, the step of determining content summary information of the video file comprises steps of:
extracting a first selected feature from each video frame of the video file;
identifying the extracted first selected feature by using at least one classifier created in advance, thus acquiring an identification result corresponding to the at least one classifier and a credibility of the identification result; and
combining the first user account with the identification result of a highest credibility, thus acquiring the content summary information of the video file.

4. The method of any one of claims 1 to 3, **characterized in that**, the method further comprises steps of :
determining a first given number of scenes;
collecting at least a first given amount of pictures for each scene, the first given amount of pictures comprising at least a second given amount of interference pictures;
extracting a second selected feature from the first given amount of pictures; and
training and acquiring a scene classifier according to the second selected feature.

5. The method of any one of claims 1 to 4, **characterized in that**, the method further comprises steps of:
determining a second given number of events;
collecting at least a third given number of pictures for each event, the third given number of pictures comprising at least a fourth given number of interference pictures;
extracting a third selected feature from the third given number of pictures; and
training and acquiring an event classifier according to the third selected feature.

6. The method of any one of claims 1 to 5, **characterized in that**, the method further comprises steps of:
determining a fourth given number of persons;
collecting at least a third given amount of pictures for each person;
detecting a face area from the third given amount of pictures and extracting a fourth selected feature; and
training and acquiring a face classifier according to the fourth selected feature.

7. The method of any one of claims 1 to 6, **characterized in that**, after the step of determining content summary information of the video file and before the step of pushing the content summary information to a second terminal device logged in with a second user account associated with the first user account, the method further comprises steps of:
receiving geographical location information sent from the first terminal device; and
adding the geographical location information into the content summary information.

8. The method of any one of claims 1 to 7, **characterized in that**, the step of determining content summary information of the video file comprises steps of:
determining the content summary information of the video file at a set period;
after the step of determining content summary information of the video file and before the step of pushing the content summary information to a second terminal device logged in with a second user account associated with the first user account, the method further comprises steps of:
determining whether the content summary information is consistent with content summary information determined in a previous set period; and
executing the step of pushing the content summary information to a second terminal device logged in with a second user account associated with the first user account if the content summary information is not consistent with content summary information determined in the previous set period.

9. The method of any one of claim 1 to 8, **characterized in that**, the method further comprises steps of:
receiving a device change message sent from the second terminal device, the device change message designating a changed terminal device; and
sending the video file to the changed terminal device and designating a frame identifier for each video frame of the video file.

10. A method for providing a real-time video, **characterized in** comprising steps of:
receiving content summary information pushed from a server, the content summary information being determined by the server according to a video file corresponding to a first user account, and the video file being acquired by the server by receiving in real time a video frame sent from a first terminal device and carried with the first user account and a frame identifier, and by storing the video frame according to the frame identifier;
displaying the content summary information;
sending a video acquisition request for acquiring the video file after a selection of the content summary information is detected; and
receiving the video file.

11. The method of claim 10, **characterized in that**, the method further comprises steps of:
receiving a device change instruction from a second user, the device change instruction designating a changed terminal device;
sending a device change message to the server, the device change message designating the changed terminal device, so that the server sends the video file to the changed terminal device and designates a frame identifier for each video frame of the video file; or sending the video file to the changed terminal device and designating a frame identifier for each video frame of the video file.

12. A device for providing a real-time video, comprising:
a first receiver unit (51), configured to receive in real time a video frame sent from a first terminal device and carried with a first user account and a frame identifier;
a storage unit (52), configured to store the video frame in a video file corresponding to the first user account according to the frame identifier;
a first determination unit (53), configured to determine content summary information of the video file;
a pusher unit (54), configured to push the content summary information to a second terminal device logged in with a second user account associated with the first user account, so that the second terminal device displays the content summary information and sends a video acquisition request for acquiring the video file after a selection of the content summary information is detected;
a second receiver unit (55), configured to receive the video acquisition request; and
a first sender unit (56), configured to send the video file to the second terminal device.

13. A device for providing a real-time video, comprising:
a first receiver unit (61), configured to receive content summary information pushed from a server, the content summary information being determined by the server according to a video file corresponding to a first user account, and the video file being acquired by the server by receiving in real time a video frame sent from a first terminal device and carried with the first user account and a frame identifier, and by storing the video frame according to the frame identifier;
a display unit (62), configured to display the content summary information;
a first sender unit (63), configured to send a video acquisition request for acquiring the video file to the server after a selection of the content summary information is detected; and
a second receiver unit (64), configured to receive the video file.

14. A computer program including instructions for executing the steps of a method for providing a real-time video according to any one of claims 1 to 11 when said program is executed by a computer.

15. A recording medium readable by a computer and having recorded thereon a computer program including instructions for executing the steps of a method for providing a real-time video according to any one of claims 1 to 11.
